# EUROPEAN PATENT APPLICATION

(11) **EP 0 822 543 A1**
(43) Date of publication of application: **04.02.1998**
(21) Application number: 96112292.6
(22) Date of filing: 30.07.1996
(51) Int. Cl.: G11B 7/24

(54) **Write-once-read-many optical disk**

(71) Applicant: INDUSTRIAL TECHNOLOGY RESEARCH INSTITUTE, Chutung, Hsinchu 31015 (TW)
(72) Inventor: Liang, Jiuh-Ming, No. 2, Alley 40, Lane 13, Chutung Chen, Hsinchu Hsien (TW)
(74) Representative: TER MEER STEINMEISTER & PARTNER GbR

(57) **Abstract**

A write-once optical disk is provided, which at least includes a substrate, a reactive layer and a reflective layer. The reactive layer comprises Si and is formed on the substrate. The reflective layer comprises metals or alloy and is formed on the reactive layer. The positions of the reactive layer and the reflective layer can be exchanged. According to the material property of the reactive layer and the reflective layer, the optical disk can be recorded by light over a wide wavelength range, so that it can form a high density and high capacity of optical disk. Even if the wavelength of the recording laser light is changed, the manufacturing process need not be redesigned and the dye need not be changed. Furthermore, a thin-film alloy is used to reduce the heat conductivity and to raise the heat efficiency, so that the reacting temperature can be lowered. The optical disk is made of inorganic materials, which can reduce the initial cost and avoid environmental pollution.

## Description

### BACKGROUND OF THE INVENTION

### Field of the invention

The present invention relates to an optical disk, and more particularly relates to a write-once optical disk and materials for applying to the same.

### Description of prior art

Generally speaking, a write-once optical disk can be used to record electronic publications and multimedia data in the form of audio CDs or CD-ROMs. It has led to increasing demand for a write-once optical disk due to its convenience and versatility.

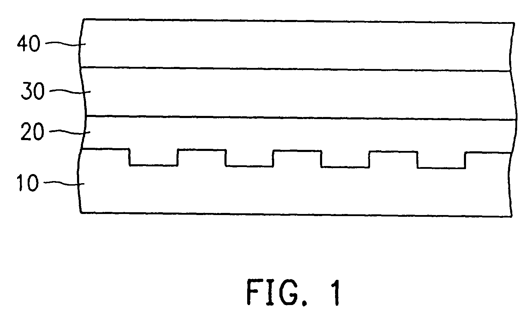

Referring to Fig. 1, the structure of a typical write-once optical disk includes a substrate 10, a reactive layer 20, a reflective layer 30 and a passivation layer 40, wherein the main portion for recording signals is the reactive layer 20 and the reflective layer 30. When an optical disk reads signals, different optical properties such as thickness of the reactive layer 20 cause a laser beam incident to the reactive layer 20 to produce different and distinguishable signals after reflection by the reflective layer 30.

At present, the reactive layer 20 of the write-once optical disks is mostly made of organic dye. While recording the optical disk, the reactive layer 20 is illuminated by the laser beam, and then a heat reaction occurs in the illuminated position of the reactive layer 20 to change its optical properties from those of places not illuminated, so that the optical disk is modulated.

However, using organic dye as recording medium suffers from the following drawbacks:
1. Due to its material properties, the organic dye does not conduct heat well and is provided with a low variation point (i.e., the point of variation occurring while heated, such as dissolution). Therefore, it is very sensitive and reacts to a low-power laser. Thus, the organic dye easily deteriorates when it is illuminated by light. The reliability of the optical disk is hence difficult to control.
2. Further due to its material properties, the range of the wavelength that can be absorbed by the organic dye is narrow, thus, the optical disk can not be used with a laser light of short wavelength. Therefore, another organic dye compatible with the short wavelength of the laser must be used, and the manufacturing process has to be redesigned. This results in a waste of money and time. Conversely, a wide range of the wavelength can be absorbed by inorganic material. Accordingly, the manufacturing process need not be changed while the wavelength of the laser beam is varied, so that the research time and initial cost can be significantly reduced.
3. Organic dyes require the use of organic dissolvents which may cause environmental pollution. For example, the organic dye, Cyanine, generally utilizes cellsolve or chlorhydrin. These organic dissolvents contaminate the environment. Therefore, reducing or even eliminating the use of organic dyes is important for optical disk fabrication.
4. Since only a narrow range of wavelengths can be absorbed by the organic dye, the variation of the reactive layer 20 is indistinct, and identifying the signals of the optical disk is difficult. Therefore, in order to enhance the identification process and provide the optical disk with acceptable tracking signals, the pits on the substrate of the optical disk must be deepened to facilitate signal identifying. However, deepening the pits on the substrate makes the injection molding of the substrate difficult and increases the complexity of the manufacturing process.

A prior art, Japanese patent JP 6-171236, discloses that using Au or Al as the reflective layer and using Ge as the reactive layer, this two layers diffuse into each other while heating during the manufacturing process to cause the variation of reflectivity on the optical disk. The optical property of the reactive layer is varied because the reflectivity of Ge is low before heating, and becomes high after heating, resulting in varied optical properties of the reactive layer 20. This technique can raise the reflectivity up to 70%, however, it is not compatible to the modulation process of CDs on the market today. That is, the modulation process of common optical disks such as audio CDs or CD-ROMs involves changing the reflectivity from high to low by heating in order to record, which is the reverse of such prior-art technique.

The other prior arts such as U.S. Patent Nos. 5,238,722 and 4,899,168 use a sulfide with optical sensitivity as the reactive layer and use Au or Al as the reflective layer. In such techniques, the absorbing property of sulfide is varied by heating. The reflectivity variation by such techniques is compatible with the modulation process of common optical disks. However, the sulfide has the same drawbacks as the organic dye. Only a narrow range of wavelength can be absorbed by sulfide, and reliability is difficult to control. And since sulfide is a poison, so it may cause environmental pollution.

### SUMMARY OF THE INVENTION

Accordingly, the primary object of the present invention is to provide a material for use in write-once optical disks, which can absorb light of a wide range of wavelengths and is suitable for recording by a short-wavelength light to form a high density and high capacity of optical disk, wherein there is no need to change the dye being used and redesign the manufacturing process.

Another object of the present invention is to provide a common material for use in write-once optical disks, which does not require the use of organic dye and dissolvents, thereby avoiding environmental pollution.

Still another object of the present invention is to provide a material for use in write-once optical disks, which can absorb light over a wide range of wavelengths, and enhance the signal identifying ability for the optical disk, so as to facilitate optical disk tracking and manufacturing.

It is another object of the present invention to provide a material for use in write-once optical disks, which is an inorganic material having low optical sensitivity, wherein the optical disk made of this material does not tend to deteriorate, and thus the reliability is high.

It is still another object of the present invention to provide a material for use in write-once optical disks, which is compatible with the modulation of common optical disks, that is, the reflectivity at the unrecorded position of the optical disk is higher, and conversely, the reflectivity at the recorded position of the optical disk is lower.

To achieve the above objects, the write-once optical disk of the present invention at least includes a substrate, a reactive layer and a reflective layer, wherein the reactive layer is made of Si and has a thickness greater than 100 Å, and is formed on the substrate. The reflective layer has a thickness greater than 100 Å too, and is formed on the reactive layer. Diffusion and segregation occur at the interface formed by the reactive layer made of Si and the reflective layer made of metals or alloy able to reflect light such as Au, Au alloy, Al or Al alloy and so on, so that modulation by reducing the reflectivity at certain positions of the optical disk can be achieved. The reflectivity before reaction can be greater than 70%, but is less than 30% after reaction. Accordingly, since Si is used as the reactive layer and no more organic dye is used, a wide range of radiation can be absorbed. The material of the present invention is suitable for manufacturing a high density and high capacity optical disk by a short-wavelength beam. Thus, the present invention can eliminate the need to redesign the manufacturing process and change the dye being used, and can avoid using organic dye and dissolvents, thereby diminishing environmental pollution.

### BRIEF DESCRIPTION OF THE DRAWINGS

The following detailed description, given by way of example and not intended to limit the invention solely to the embodiments described herein, will best be understood in conjunction with the accompanying drawings in which:
Fig. 1 is a cross section schematically illustrating the structure of an optical disk;
Fig. 2 is a diagram illustrating the relation between the reflectivity and the wavelength in the vicinity of the reaction point of the first preferred embodiment according to the present invention;
Fig. 3 is a diagram illustrating the dynamic test for an optical disk of the first preferred embodiment according to the present invention;
Fig. 4 is a diagram illustrating the relation between the reflectivity and the wavelength in the vicinity of the reaction point of the second preferred embodiment according to the present invention; and
Fig. 5 is a diagram illustrating the dynamic test for an optical disk of the second preferred embodiment according to the present invention.

### DETAILED DESCRIPTION OF THE PREFERRED EMBODIMENTS

The present invention can achieve modulation by reducing the reflectivity at certain positions of the optical disk since diffusion and segregation occur at the interface formed by the reactive layer made of Si and the reflective layer made of metals or alloy able to reflect light such as Au, Au alloy, Al or Al alloy and so on. That is because the reactive layer is a metal contact induced crystallization (MCIC) material, i.e., a semiconductor material which is to be crystallized while contacting with a metal. For a further description, see the paper of G. Lelay issued by Surface Science at 1982, and the book entitled "Semiconductor Technology" written by A. Hiraki. Roughly speaking, a semiconductor tends to crystallize at the interface where the semiconductor comes into contact with a metal such as Au or Al, if the semiconductor has a bandgap energy less than 2.5 eV or a larger dielectric constant. For example, the sputtered Si film is normally an amorphous structure. It is necessary to raise the temperature of the substrate to 600°C in order to make the sputtered Si layer crystallize. But if the Si film is coated on an Al film, then it crystallizes at the interface between the Si layer and the Al layer at around 180 to 200°C. The same is true for Au, Cu, Ni and so on. The choice for the reactive layer is Si, Ge, InSb, GaAs, InP or GaP, while the reflective layer is made of metals or alloy such as Al, Au, Cu, In, Ga or Sn or the alloy including at least one metal mentioned above.

Referring to Fig. 1, the positions of the reactive layer 20 and the reflective layer 30 can be changed depending on what material is used as the reflective layer. The manufacturing method of the present invention includes: providing a substrate for an optical disk; coating a metal or an alloy to form a reflective layer and coating Si to form a reactive layer by sputtering; and then forming a passivation layer by spin-on. Both the reflective layer and the reactive layer have a thickness greater than 100 Å. The passivation layer has a thickness of around 3 to 10 µm. Due to the property of the material being used, the reaction temperature needs not be too high, normally less than 200°C. The range of wavelength for application is preferably above 5000 Å, and is best above 5500 Å due to the adequate reflectance modulation.

Detailed description of the present invent ion is given in the two preferred embodiments below.

### Embodiment 1:

Referring Fig. 1, an optical disk of the present invention includes: a substrate 10; a reactive layer 20 formed on the substrate 10; a reflective layer 30 formed on the reactive layer 20; and a passivation layer 40 formed on the reflective layer 30. Wherein, the reactive layer 20 is made by coating Si on the substrate 10 with a power of 1 kW for 8 minutes to provide the reactive layer 20 with a thickness larger than 100 Å. The reflective layer 30 is an alloy of Au or Al and Si or Tb, in which Au is coated with a power of 0.6 kW and Si is coated with a power of 1 kW for 2 minutes by sputtering to provide the alloy of Au and Si with a thickness larger than 100 Å. The passivation layer 40 is coated by spin-on at 2000 rpm to provide the passivation layer 40 with a thickness of around 3 to 10 µm. Further, a preferred thickness of the reflective layer 30 is about 1000 Å, and a preferred thickness of the reactive layer 20 is about 600 to 800 Å.

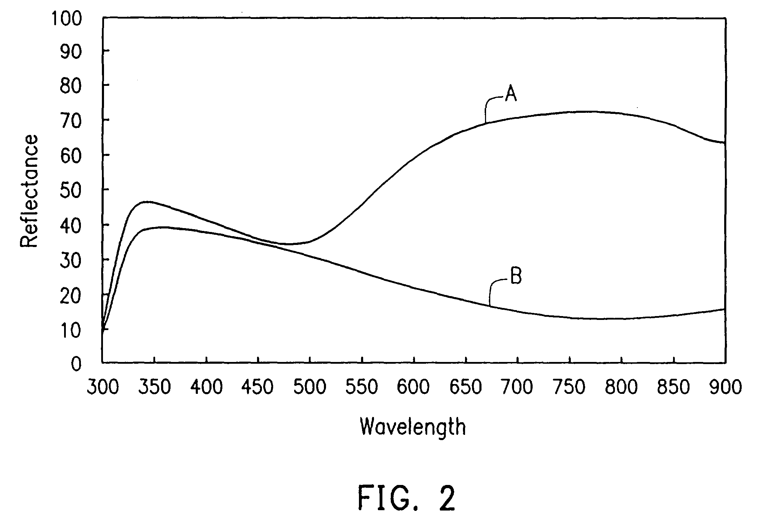

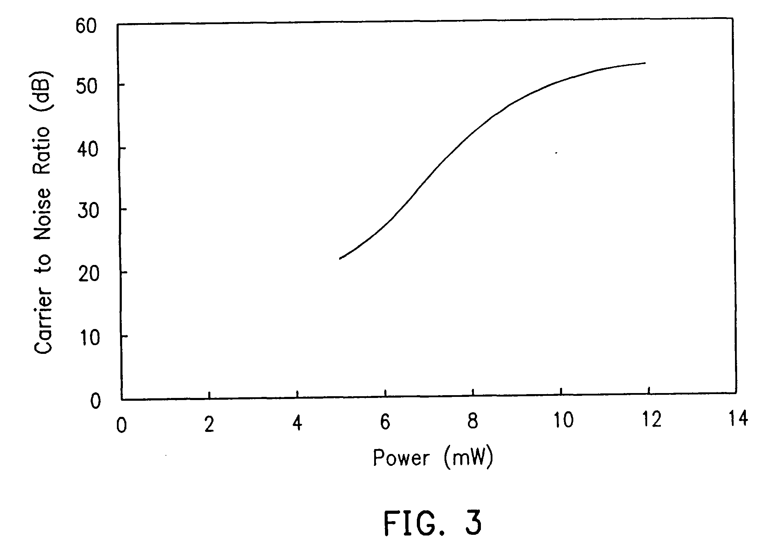

A static test for reflectivity variation around the reaction point is performed on a transparent glass plate. The relation between the wavelength of recording light and the reflectivity is illustrated in rig. 2. Wherein the curve **A** represents the reflectivity before reacting and the curve **B** represents the reflectivity after reacting. At the wavelength of 780 nm, the reflectivity is 72.5% before reacting, and is 11.3% after reacting. The result of the dynamic test under the same condition of Fig. 2 is shown in Fig. 3, which illustrates the relation between the carrier to noise ratio (CNR, which is used to measure the quality of signals recorded on the optical disk) and the power of the laser light being used to record. The recording conditions are as follows: the radius of the optical disk is 44 mm, the rotating speed of the optical disk is 10 rps, the recording track being recorded is a half period of 720 kHz. By the above conditions, the signal quality of about 47 dB at 9 mW and about 53 dB at 12 mW can be obtained, which is close to 47∼50 dB of the optical disk made by using organic dye such as Cyanine and organic dissolvent.

### Embodiment 2:

The positions of the reactive layer 20 and the reflective layer 30 may change to form an optical disk according to another preferred embodiment of the present invention. That is, the optical disk includes: a substrate 10; a reflective layer 30 formed on the substrate 10; a reactive layer 20 formed on the reflective layer 30; and a passivation layer 40 formed on the reactive layer 20. Further, a preferred thickness of the reflective layer 30 is about 700 to 1000 Å, and a preferred thickness of the reactive layer 20 is about 400 to 800 Å in this embodiment.

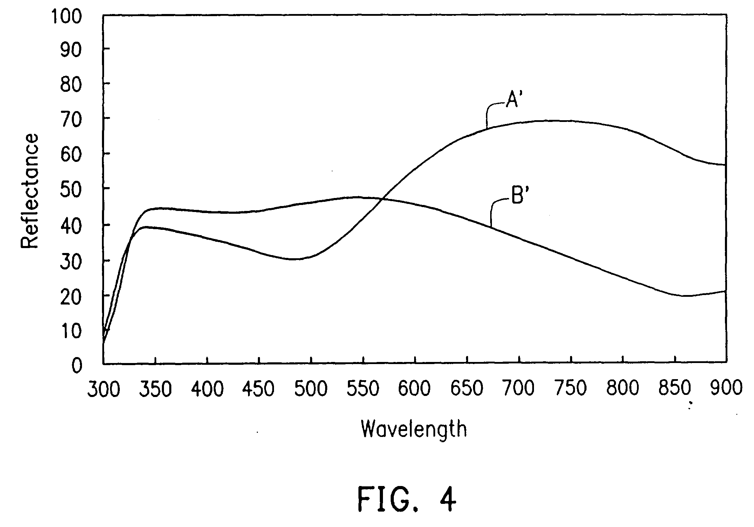

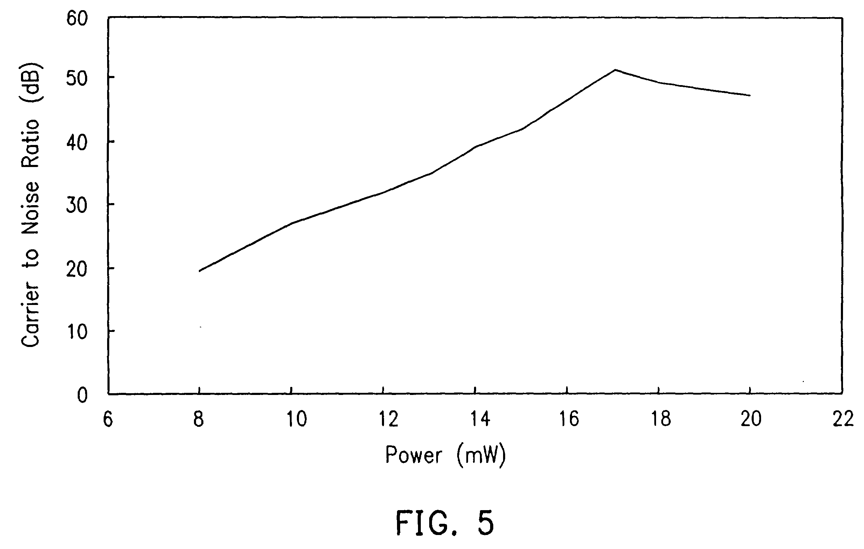

A static test for reflectivity variation around the reaction point is performed on a transparent glass plate. The relation between the wavelength of recording light and the reflectivity is illustrated in Fig. 4. Wherein the curve **A'** represents the reflectivity before reacting and the curve **B'** represents the reflectivity after reacting. At the wavelength of 780 nm, the reflectivity is 65.9% before reacting, and is 27% after reacting. The result of the dynamic test under the same condition of Fig. 4 is shown in Fig. 5, which illustrates the relation between the carrier to noise ratio and the power of the laser light being used to record. The recording conditions are as follows: the radius of the optical disk is 44 mm, the rotating speed of the optical disk is 10 rps, the recording track being recorded is a half period of 720 kHz. By the above conditions, the signal quality of about 51 dB at 17 mW can be obtained.

The present invention is not limited to write-once optical disks, and variations and modifications may be made by those who skilled in the art to apply to the other heat recording devices or a common optical recording media such as optical cards or optical disks.

The present invention thus demonstrates the following effects:
1. The material of the present invention can absorb radiation over a wide range, which is distinct from the organic dye or sulfide used in the prior art. That is suitable to recording by a short-wavelength light to form a high density and high capacity optical disk, and obviates the need to change the dye being used and redesigning the manufacturing process.
2. Since a thin-film alloy is used in the present invention, the heat conductivity of the thin film can be reduced to raise the heat efficiency, and the speed of the segregating reaction can be increased, so that the recording of the optical disk does not require high temperature and large laser power to perform the recording.
3. The present invention utilizes inorganic materials that are cheaper than the organic materials being used in prior art, and does not cause environmental pollution like the organic materials do.
4. The inorganic materials used in the present invention have low optical sensitivity, so that the optical disks made of such materials are stable and do not intend to deteriorate. This assures reliability.
5. The materials used in the present invention are compatible with the modulation process of common optical disks. That is, the reflectivity of a recorded location is lower than that of an unrecorded location on the optical disk.

While the present invention has been particularly shown and described with reference to preferred embodiments, it will be readily appreciated by those of ordinary skill in the art that various changes and modifications, such as inserting other films between the reactive layer or the reflective layer and the passivation layer to raise the performance, may be made without departing from the spirit and scope of the invention. It is intended that the claims be interpreted to cover the disclosed embodiment, those alternatives which have been discussed above and all equivalents thereto.

## Claims

1. A write-once optical disk, comprising a substrate, a reactive layer, and a reflective layer, wherein said reactive layer has a thickness greater than 100 Å and is made of a metal contact induced crystallization semiconductor, which has a high reflectivity before recording and a low reflectivity after recording; and said reflective layer comprises at least one of Al, Au, Cu, In, Ga and Sn, which has a thickness greater than 100 Å.

2. A write-once optical disk as claimed in claim 1, wherein the metal contact induced crystallization semiconductor comprises one of Si, Ge, InSb, GaAs, InP and GaP.

3. A write-once optical disk as claimed in claim 1, wherein said reactive layer is made of Si and is formed on said substrate; said reflective layer is made of Au alloy and is formed on said reactive layer.

4. A write-once optical disk as claimed in claim 1, wherein said reflective layer comprises at least one alloy of Al, Au, Cu, In, Ga and Sn.

5. A write-once optical disk as claimed in claim 3, wherein said reflective layer is an alloy of Au and Si.

6. A write-once optical disk as claimed in claim 5, wherein said reflective layer has a thickness of around 1000Å.

7. A write-once optical disk as claimed in claim 3, wherein said reactive layer has a thickness of around 600 Å to 800 Å.

8. A write-once optical disk as claimed in claim 3, further comprising a passivation layer formed on the reflective layer, which has a thickness of about 3 to 10 µm.

9. A write-once optical disk as claimed in claim 1, wherein said reflective layer is made of Al alloy and is formed on said substrate; said reactive layer is made of Si and is formed on said reactive layer.

10. A write-once optical disk as claimed in claim 9, wherein said reactive layer has a thickness of about 400 Å to 800 Å.

11. A write-once optical disk as claimed in claim 9, wherein said reflective layer comprises an alloy of Al and Tb.

12. A write-once optical disk as claimed in claim 11, wherein the reflective layer has a thickness of around 700 Å to 1000 Å.

13. A write-once optical disk as claimed in claim 9, further comprising a passivation layer formed on the reactive layer, which has a thickness of about 3 to 10 µm.

14. A write-once optical disk as claimed in claim 3, wherein the wavelength range for the light being used to record the write-once optical disk is at least above the wavelength range of visible light.

15. A write-once optical disk as claimed in claim 3, wherein the wavelength range for the light being used to record the write-once optical disk is above 3500Å.

16. An optical recording medium, said optical recording medium comprising: a substrate; a reactive layer made of at least one of Si, Ge, InSb, GaAs, InP and GaP, which has a high reflectivity before recording and a low reflectivity after recording; and a reflective layer made of at least one of Al, Au, Cu, In, Ga and Sn.

17. An optical recording medium as claimed in claim 16, wherein said reactive layer has a thickness larger than 100 Å, and said reflective layer has a thickness larger than 100 Å.

18. An optical recording medium as claimed in claim 16, wherein said reactive layer is made of Si and is formed on said substrate; said reflective layer is made of Au alloy and is formed on said reactive layer.

19. An optical recording medium as claimed in claim 16, wherein said reflective layer has a thickness of around 1000Å, and said reactive layer has a thickness of around 600 Å to 800 Å.

20. An optical recording medium as claimed in claim 16, further comprising a passivation layer formed on the reflective layer, which has a thickness of about 3 to 10 µm.

21. An optical recording medium as claimed in claim 16, wherein said reflective layer comprises at least one alloy of Al, Au, Cu, In, Ga and Sn.

22. An optical recording medium as claimed in claim 16, wherein said reflective layer is made of Al alloy and is formed on said substrate; said reactive layer is made of Si and is formed on said reactive layer.

## Amended claims

### Amended claims in accordance with Rule 86(2) EPC.

1. A write-once optical disk, comprising a substrate, a reactive layer, and a reflective layer, wherein said reactive layer has a thickness greater than 10.0 nm (100 Å) and is made of a metal contact induced crystallization semiconductor, which has a high reflectivity before recording and a low reflectivity after recording; and said reflective layer comprises at least one of Al, Au, Cu, In, Ga, Sn, Al alloy, Au alloy, Cu alloy, In alloy, Ga alloy and Sn alloy, which has a thickness greater than 10.0 nm (100 Å).
